# FASCICULE DE BREVET EUROPEEN

(11) **EP 0 666 434 B1**
(45) Date de publication et mention de la délivrance du brevet: **19.03.1997**
(21) Numéro de dépôt: 94402579.0
(22) Date de dépôt: 15.11.1994
(51) Int. Cl.: F16G 13/06

(54) **Chaîne de transmission perfectionnée, notamment pour cycle**
Treibkette, insbesondere für ein Fahrrad
Transmission chaine, particularly for bicycle

(30) Priorité: 07.02.1994 FR 9401352
(43) Date de publication de la demande: 09.08.1995
(73) Titulaire: SACHS INDUSTRIES S.A. (HURET ET MAILLARD REUNIS), 80210 Chepy (FR)
(72) Inventeur: Guichard, Daniel, F-38260 Gillonnay (FR)
(74) Mandataire: Polus, Camille

(56) Documents cités:
- WO-A-90/04728
- FR-A- 2 337 076
- FR-A- 2 389 804
- FR-A- 2 632 599
- FR-A- 2 654 171
- GB-A- 318 212
- US-A- 4 983 147

## Description

La présente invention concerne une chaîne de transmission perfectionnée.

Elle s'applique en particulier aux chaînes de transmission pour cycle.

On connaît déjà dans l'état de la technique une chaîne de transmission pour cycle comprenant des maillons intérieurs et extérieurs alternés et articulés entre eux par des axes.

Les maillons intérieurs sont formés par deux plaques dites plaques intérieures, reliées par deux douilles emmanchées avec serrage dans deux trous prévus à cet effet dans chacune des plaques intérieures. Les maillons extérieurs sont également formés par deux plaques extérieures pourvues chacune de deux trous dans lesquels sont emmanchés avec serrage deux axes qui s'étendent à l'intérieur des douilles des maillons intérieurs.

En variante, les douilles des maillons intérieurs peuvent être remplacées par des ergots tubulaires ou canons venus de matière avec les plaques intérieures.

De plus, autour des douilles ou des canons des maillons intérieurs sont en général disposés des rouleaux au niveau desquels s'effectue l'engrènement avec les dents des roues dentées avec lesquelles la chaîne coopère.

L'un des problèmes que l'on rencontre dans ce type de chaîne de transmission est lié au fait que les extrémités des axes d'articulation sont fixées dans les trous des plaques extérieures en faisant saillie sur la face extérieure de cette plaque. Lors du déraillage, c'est-à-dire lors du passage de la chaîne d'une roue dentée sur une autre, les extrémités saillantes des axes heurtent la fourchette de guidage de chaîne du dispositif de déraillage équipant le cycle, ceci provoquant des usures de la chaîne et du dispositif de déraillage nuisant à son bon fonctionnement.

Par ailleurs, lorsque le déraillage se fait en montée, c'est-à-dire lorsque l'on passe d'une roue dentée de petit diamètre à une roue dentée de plus grand diamètre, les extrémités saillantes des axes heurtent la plus grande roue dentée, ceci augmentant le trajet de la chaîne entre les plus petite et plus grande roues dentées et retardant l'amorçage de l'accrochage de la chaîne sur une des dents de la plus grande roue dentée.

FR-A-2 337 076 ou US-A-4 983 147 décrit une chaîne de transmission, notamment pour cycle, comportant des plaques extérieures de maillons extérieurs alternées avec des plaques intérieures de maillons intérieurs, les plaques extérieures étant articulées avec les plaques intérieures au moyen d'axes fixés sur les plaques extérieures de manière que leurs extrémités traversent les plaques extérieures, les plaques extérieures comprenant des enfoncements ménagés sur leurs faces extérieures, formant logements pour les extrémités des axes.

L'invention a notamment pour but de remédier aux inconvénients précisés ci-dessus et de proposer une chaîne de transmission permettant de réaliser un déraillage franc et rapide.

A cet effet, l'invention a pour objet une chaîne de transmission du type précité, caractérisée en ce que chaque plaque extérieure comporte un enfoncement longitudinal rectiligne s'étendant sur toute la longueur de la plaque, formant logement pour les extrémités des deux axes d'articulation de la plaque extérieure.

Suivant d'autres caractéristiques de l'invention:
- l'enfoncement longitudinal rectiligne de la face extérieure d'une plaque extérieure forme une saillie longitudinale rectiligne sur la face intérieure de cette plaque ;
- chaque plaque extérieure comprend deux extrémités d'articulation renflées, de contours sensiblement circulaires, les bords de ces extrémités dépassant de part et d'autre de la saillie de la face intérieure de la plaque étant repliés vers les plaques intérieures adjacentes ;
- la face extérieure des bords repliés est chanfreinée ;
- chaque maillon extérieur délimite entre ses plaques extérieures un logement d'engrènement avec une dent de roue dentée muni d'extrémités évasées délimitées par des flancs chanfreinés ménagés dans les faces intérieures en regard des plaques extérieures, la distance maximale séparant les flancs chanfreinés en regard ayant une valeur comprise entre 88% et 95% de la longueur des axes d'articulation;
- les plaques extérieures sont fabriquées par forgeage à froid ;
- un signe est gravé sur le fond de l'enfoncement des plaques extérieures.

L'invention va être décrite plus en détail cidessous en se référant aux dessins annexés, donnés uniquement à titre d'exemple et sur lesquels :
- la figure 1 est une vue en plan d'une chaîne selon l'invention ;
- la figure 2 est une vue de dessus de la chaîne représentée à la figure 1 ;
- la figure 3 est une vue en coupe suivant la ligne 3-3 de la figure 1, à échelle agrandie ;
- la figure 4 est une vue en coupe suivant la ligne 4-4 de la figure 1, à échelle agrandie ;
- la figure 5 est une vue suivant la flèche 5 de la figure 1 d'une plaque extérieure de la chaîne selon l'invention ; et
- la figure 6 est une vue en coupe suivant la ligne 6-6 de la figure 5.

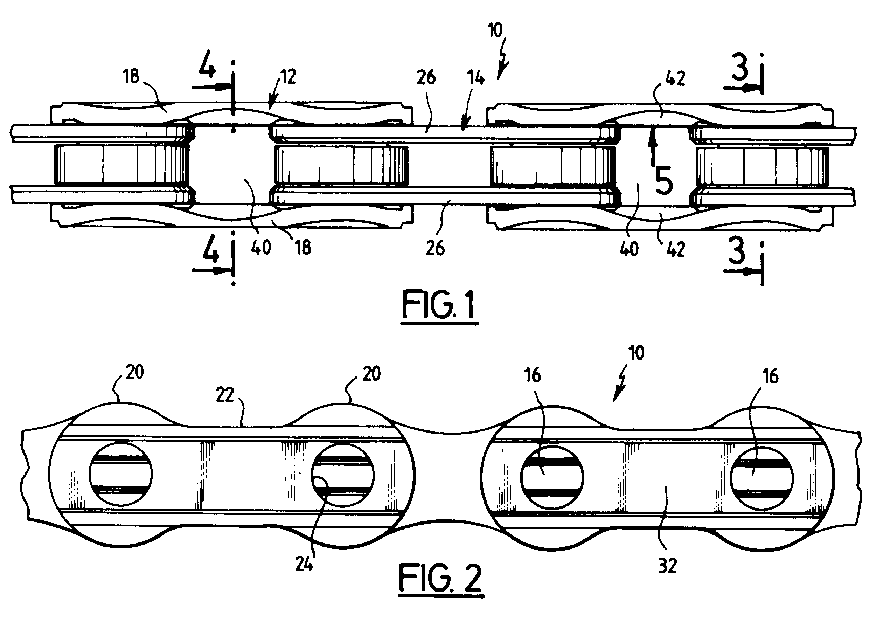

Sur les figures 1 à 4, on a représenté une chaîne de transmission selon l'invention, notamment pour cycle, désignée par la référence générale 10.

De façon classique, la chaîne 10 comprend des maillons extérieurs 12 et intérieurs 14 articulés entre eux par des axes 16. Les maillons extérieurs 12 comportent deux plaques extérieures 18 munies de deux extrémités renflées d'articulation 20, de contours sensiblement circulaires, reliées entre elles par une partie de liaison 22, de largeur inférieure à la largeur des extrémités 20.

Les plaques extérieures 18 comportent également chacunes deux trous 24, ménagés dans les extrémités d'articulation 20, dans lesquels sont emmanchés avec serrage deux axes 16 de manière que les extrémités 16A de ces axes traversent les plaques 18.

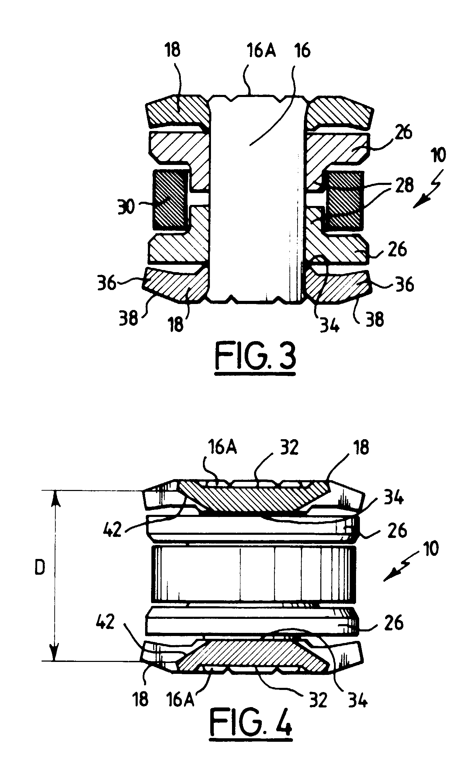

Les maillons intérieurs 14 comportent deux plaques intérieures 26 articulées sur les axes 16, par exemple au moyen de collerettes ou canons 28 (voir figure 3). Des rouleaux 30 sont disposés autour de ces canons 28.

Chaque plaque extérieure 18 comporte un enfoncement longitudinal rectiligne 32 ménagé sur sa face extérieure, s'étendant sur toute la longueur de la plaque 18 et formant logement pour les extrémités 16A des deux axes d'articulation 16 de la plaque extérieure 18, comme cela est représenté plus en détail à la figure 4.

Dans l'exemple représenté sur les figures, les extrémités 16A des axes sont sensiblement alignées avec les bords des enfoncements 32. En variante, les extrémités 16A des axes peuvent être en retrait par rapport aux bords des enfoncements 32.

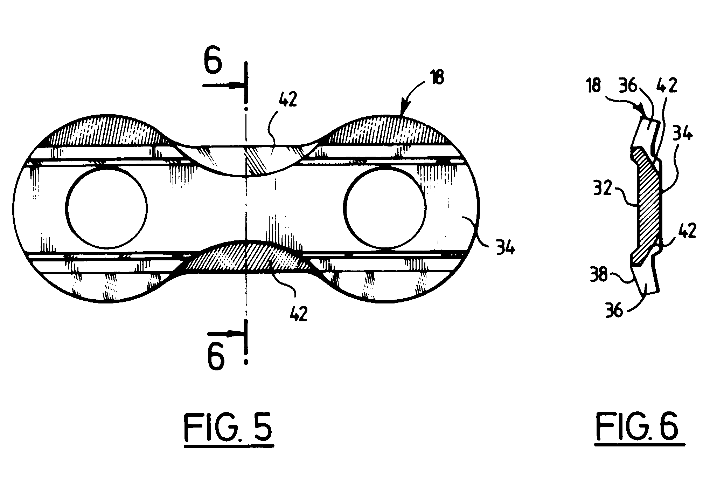

De préférence, les plaques extérieures 18 sont fabriquées par forgeage à froid à partir d'une plaque métallique découpée classique, de manière qu'en formant l'enfoncement longitudinal rectiligne 32 sur la face extérieure d'une plaque extérieure 18, on forme une saillie longitudinale rectiligne 34 sur la face intérieure de cette plaque, comme cela est représenté en particulier aux figures 5 et 6. Dans ce cas, l'épaisseur des plaques extérieures 18 est maximale entre le fond de l'enfoncement 32 et la face intérieure de ces plaques.

Les bords 36 des extrémités d'articulation 20 dépassant de part et d'autre de la saillie 34 sont repliés vers les plaques intérieures 26 adjacentes, de manière à empêcher l'introduction d'une dent de roue dentée entre des plaques extérieures 18 et intérieures 26 adjacentes.

Afin de faciliter le déraillage de la chaîne et l'accrochage de celle-ci sur une nouvelle roue dentée, la face extérieure 38 des bords repliés 36 est chanfreinée.

Dans un même but, le logement 40 d'engrènement avec une dent de roue dentée, délimité entre les plaques extérieures 18 d'un maillon extérieur 12 (voir figure 1), est muni d'extrémités évasées délimitées par des flancs chanfreinés 42 ménagés dans les faces intérieures en regard des plaques extérieures 18 (voir figures 4 à 6).

Les flancs chanfreinés 42 ont une forme générale sensiblement conique et la distance maximale D (voir figure 4) séparant les flancs chanfreinés 42 en regard a une valeur comprise de préférence entre 88% et 95% de la longueur des axes d'articulation 16. Dans l'exemple décrit, chaque flanc chanfreiné 42 s'étend depuis la face intérieure de la plaque extérieure 18 jusqu'à peu près un plan contenant le fond de l'enfoncement 32 de cette plaque 18, la distance D étant égale à environ 93% de la longueur des axes 16.

De préférence, les chanfreins des bords repliés 36 et les flancs 42 sont réalisés lors de l'opération de forgeage à froid des plaques extérieures 18.

Le fonctionnement de la chaîne de transmission selon l'invention est le suivant.

Lors d'une opération de déraillage, la face extérieure d'une plaque extérieure 18 vient la première en contact avec la denture de la roue sur laquelle on veut engrener la chaîne. Les extrémités 16A des axes étant logées dans l'enfoncement 32 de cette plaque extérieure 18, la face extérieure de cette plaque ne présente pas de saillie ce qui facilite le glissement de la chaîne au contact de la denture de la roue et raccourcit le trajet de la chaîne.

L'élargissement délimité par les flancs chanfreinés 42 des logements 40 permet un amorçage très rapide de l'accrochage d'une dent de la roue dentée dans un des logements 40. De cette façon, le passage de la chaîne 10 d'une roue dentée à une autre se fait de façon franche et rapide, notamment lors d'un déraillage en montée.

L'invention ne se limite pas au mode de réalisation décrit ci-dessus.

En particulier, les plaques extérieures 18 peuvent comporter un ou plusieurs enfoncements de logement des extrémités des axes, de formes variées, par exemple deux enfoncements circulaires entourant chaque axe d'articulation des plaques extérieures.

L'invention s'applique aussi bien à des chaînes de transmission pour cycle qu'à des chaînes de transmission pour véhicule automobile ou pour machine industrielle.

L'invention comporte de nombreux avantages.

Les extrémités 16A des axes alignées avec les bords des enfoncements 32, ou en retrait par rapport à ces bords, ne heurtent pas les roues dentées ou les branches de la fourchette du dérailleur, lors d'une opération de déraillage. La résistance à l'arrachement des plaques extérieures et la durée de vie de la chaîne sont ainsi augmentées.

Par ailleurs, le fond de l'enfoncement 32, qui n'est pas en contact avec une roue dentée et qui par conséquent n'est pas soumis à l'usure, peut comporter avantageusement un signe gravé indiquant par exemple l'origine de la chaîne.

La distance maximale D séparant les flancs chanfreinés en regard d'un maillon extérieur, qui caractérise l'élargissement d'un logement d'engrènement de ce maillon, peut être supérieure de 10% à cette même distance mesurée sur des maillons extérieurs de chaînes classiques, ceci sans augmenter l'épaisseur des plaques extérieures et donc sans augmenter leur poids.

## Revendications

1. Chaîne de transmission, notamment pour cycle, comportant des plaques extérieures (18) de maillons extérieurs (12) alternées avec des plaques intérieures (26) de maillons intérieurs (14), les plaques extérieures (18) étant articulées avec les plaques intérieures (26) au moyen d'axes (16) fixés sur les plaques extérieures (18) de manière que leurs extrémités (16A) traversent les plaques extérieures (18), les plaques extérieures (18) comprenant des enfoncements (32) ménagés sur leurs faces extérieures, formant logements pour les extrémités (16A) des axes, caractérisée en ce que chaque plaque extérieure (18) comporte un enfoncement longitudinal rectiligne (32) s'étendant sur toute la longueur de la plaque (18), formant logement pour les extrémités (16A) des deux axes (16) d'articulation de la plaque extérieure (18).

2. Chaîne selon la revendication 1, caractérisée en ce que l'enfoncement longitudinal rectiligne (32) de la face extérieure d'une plaque extérieure (18) forme une saillie longitudinale rectiligne (34) sur la face intérieure de cette plaque (18).

3. Chaîne selon la revendication 2, caractérisée en ce que chaque plaque extérieure (18) comprend deux extrémités d'articulation renflées (20), de contours sensiblement circulaires, les bords (36) de ces extrémités (20) dépassant de part et d'autre de la saillie (34) de la face intérieure de la plaque (18) étant repliés vers les plaques intérieures (26) adjacentes.

4. Chaîne selon la revendication 3, caractérisée en ce que la face extérieure (38) des bords repliés (36) est chanfreinée.

5. Chaîne selon l'une quelconque des revendications précédentes, caractérisée en ce que chaque maillon extérieur (12) délimite entre ses plaques extérieures (18) un logement (40) d'engrènement avec une dent de roue dentée muni d'extrémités évasées délimitées par des flancs chanfreinés (42) ménagés dans les faces intérieures en regard des plaques extérieures (18), la distance maximale (D) séparant les flancs chanfreinés (42) en regard ayant une valeur comprise entre 88% et 95% de la longueur des axes d'articulation.

6. Chaîne selon l'une quelconque des revendications précédentes, caractérisée en ce que les plaques extérieures (18) sont fabriquées par forgeage à froid.

7. Chaîne selon l'une quelconque des revendications précédentes, caractérisée en ce qu'un signe est gravé sur le fond de l'enfoncement (32) des plaques extérieures (18).

## Patentansprüche

1. Treibkette, insbesondere für Zweiräder, mit äußeren Platten (18) äußerer Kettenglieder (12), die mit inneren Platten (26) innerer Kettenglieder (14) abwechseln, wobei die äußeren Platten (18) mit den inneren Platten (26) durch Achsen (16) gelenkig verbunden sind, die so an den äußeren Platten (18) befestigt sind, daß ihre Enden (16A) die äußeren Platten (18) durchsetzen, wobei die äußeren Platten (18) Vertiefungen (32) aufweisen, die in ihren äußeren Oberflächen ausgebildet sind und Sitze für die Enden (16A) der Achsen bilden, dadurch gekennzeichnet, daß jede äußere Platte (18) eine längsverlaufende geradlinige Vertiefung (32) aufweist, die sich über die gesamte Länge der Platte (18) erstreckt und Sitze für die Enden (16A) der beiden Gelenkachsen (16) der äußeren Platte (18) bildet.

2. Kette nach Anspruch 1, dadurch gekennzeichnet, daß die längsverlaufende geradlinige Vertiefung (32) der Außenfläche einer äußeren Platte (18) einen längsverlaufenden geradlinigen Vorsprung (34) auf der Innenfläche dieser Platte (18) bildet.

3. Kette nach Anspruch 2, dadurch gekennzeichnet, daß jede äußere Platte (18) zwei verdickte Gelenkenden (20) mit im wesentlichen kreisförmigen Konturen aufweist und daß die Ränder (36) dieser Enden (20), die beiderseits über den Vorsprung (34) der Innenfläche der Kette (18) überstehen, zu den benachbarten inneren Platten (26) gebogen sind.

4. Kette nach Anspruch 3, dadurch gekennzeichnet, daß die Außenfläche (38) der gebogenen Ränder (36) abgefast ist.

5. Kette nach einem der vorstehenden Ansprüche, dadurch gekennzeichnet, daß jedes äußere Kettenglied (12) zwischen seinen äußeren Platten (18) eine Aufnahme (40) für den Eingriff mit einem Zahnradzahn begrenzt, die mit erweiterten Enden versehen ist, die begrenzt werden durch abgefaste Flanken (42), die an den gegenüberliegenden Innenflächen der äußeren Platten (18) ausgebildet sind, wobei der maximale Abstand (D) zwischen den gegenüberliegenden abgefasten Flanken (42) einen Wert zwischen 88 % und 95 % der Länge der Gelenkachsen hat.

6. Kette nach einem der vorstehenden Ansprüche, dadurch gekennzeichnet, daß die äußeren Platten (18) durch Kaltschmieden hergestellt sind.

7. Kette nach einem der vorstehenden Ansprüche, dadurch gekennzeichnet, daß eine Markierung in dem Boden der Vertiefung (32) der äußeren Platten (18) eingraviert ist.

## Claims

1. Transmission chain, notably for a cycle, comprising outer plates (18) of outer links (12) alternating with inner plates (26) of inner links (14), the outer plates (18) articulating with the inner plates (26) by means of spindles (16) fixed to the outer plates (18) in such a way that their ends (16A) pass through the outer plates (18), the outer plates (18) comprising recesses (32) provided on their outer surfaces, forming housings for the ends (16A) of the spindles, characterised in that each outer plate (18) comprises a straight longitudinal recess (32) extending along the full length of the plate (18), forming a housing for the ends (16A) of the two articulation spindles (16) of the outer plate (18).

2. Chain according to claim 1, characterised in that the straight longitudinal recess (32) in the outer surface of an outer plate (18) forms a straight longitudinal projection (34) on the inner surface of said plate (18).

3. Chain according to claim 2, characterised in that each outer plate (18) comprises two enlarged articulation ends (20), of substantially circular contour, the edges (36) of these ends (20) which protrude on each side of the projection (34) on the inner surface of the plate (18) being folded towards the adjacent inner plates (26).

4. Chain according to claim 3, characterised in that the outer surface (38) of the folded edges (36) is chamfered.

5. Chain according to any one of the preceding claims, characterised in that each outer link (12) defines, between its outer plates (18), a recess (40) for engaging with a tooth of a serrated wheel, said recess being provided with flared ends bounded by chamfered flanks (42) formed in the opposing inner surfaces of the outer plates (18), the maximum distance (D) separating the opposing chamfered flanks (42) amounting to between 88% and 95% of the length of the articulation spindles.

6. Chain according to any one of the preceding claims, characterised in that the outer plates (18) are produced by cold forging.

7. Chain according to any one of the preceding claims, characterised in that a symbol is engraved on the base of the recess (32) in the outer plates (18).
